# EUROPEAN PATENT SPECIFICATION

(11) **EP 3 482 053 B1**
(45) Date of publication and mention of the grant of the patent: **23.12.2020**
(21) Application number: 17824627.8
(22) Date of filing: 22.06.2017
(51) Int. Cl.: F01P 3/12, B60H 1/00, H01M 10/613, B60K 11/02, F01P 3/20, F01P 7/16, H01M 10/625, B60H 1/06, B60H 1/32, B60K 11/04, B60K 1/00, H01M 10/6563, H01M 10/6568, H01M 10/663, F01P 3/18, F01P 7/04

(54) **A COOLING SYSTEM FOR A HYBRID VEHICLE**
KÜHLSYSTEM FÜR EIN HYBRIDFAHRZEUG
SYSTÈME DE REFROIDISSEMENT POUR UN VÉHICULE HYBRIDE

(30) Priority: 07.07.2016 SE 1651011
(43) Date of publication of application: 15.05.2019
(73) Proprietor: Scania CV AB, 151 87 Södertälje (SE)
(72) Inventor: KARDOS, Zoltan, 151 35 Södertälje (SE); HALL, Ola, 117 67 Stockholm (SE)
(74) Representative: Scania CV AB
(86) International application number: PCT/SE2017/050693
(87) International publication number: WO 2018/009122

(56) References cited:
- EP-A1- 2 409 864
- EP-A1- 3 023 609
- EP-A2- 3 012 133
- WO-A1-2011/050892
- WO-A1-2011/149409
- WO-A1-2012/056302
- WO-A1-2012/087223
- WO-A1-2014/000884
- US-A1- 2013 061 627
- US-A1- 2014 124 170
- US-A1- 2015 333 379
- US-A1- 2016 153 343

## Description

### BACKGROUND OF THE INVENTION AND PRIOR ART

The present invention relates to a cooling system in a hybrid vehicle according to the preamble of claim 1.

AC systems are commonly used to cool cab spaces in vehicles. AC systems usually comprise a compressor refrigeration system by which it is possible to cool the air in the cab to a lower temperature than ambient air temperature.

A hybrid vehicle may be driven by an electrical machine and a combustion engine. The electrical machine works as an engine and drives the vehicle during certain operating conditions such as at low speeds and accelerations of the vehicle. During certain operating conditions, the electrical machine works as a generator where it supplies electrical energy to an electric energy storage. The combustion engine may drive the vehicle independently or together with the electrical machine. The combustion engine and the electrical machine is heated during operation. Consequently, they need to be cooled.

The combustion engine may have an optimal efficient temperature in the temperature range of 90°C-100°C. The electrical energy storage and power electronics controlling the flow of electrical energy between the electrical machine and the electrical energy storage are also heated during operation and need to be cooled. The electrical energy storage may have an optimal operating temperature within the temperature range of 20-25°C. The power electronics can usually withstand a temperature up to about 60-70°C. Furthermore, there may be a cooling demand of charge air, gearbox oil, a retarder etc. Consequently, there is a lot of objects to be cooled to widely varying operating temperatures in a hybrid vehicle.

US 2012/125032 shows a refrigeration plant with refrigerant evaporator arrangement and process for parallel air and battery contact cooling. The refrigeration plant includes a refrigerant evaporator arrangement for parallel air and battery contact cooling, having with a refrigerant compressor and a condenser an evaporator with an assigned controllable expansion member for air cooling and an evaporator as a battery contact cooler with an assigned controllable expansion member for battery cooling are provided. A throttling member is located between the evaporator and the tap of the assigned controllable expansion member.

EP3023609A1 discloses a cooling system according to the preamble of claim 1.

### SUMMARY OF THE INVENTION

The object of the present invention is to provide a cooling system in a hybrid vehicle providing an efficient cooling of a combustion engine, an electrical machine with associated components and a cab space with the use of relatively few including components.

The above mentioned object is achieved by the cooling system according to the characterized part of claim 1. The combustion engine, the electrical machine and an electric energy storage need to be cooled to different temperature. The cooling system includes a first circuit with a first coolant cooling the combustion engine. The cooling system includes a second circuit with a second coolant having a lower temperature than the first coolant. The second coolant is used to cool the electrical machine. The cooling system includes a third circuit with a third coolant. The third coolant can be cooled by a refrigeration circuit to a lower temperature than the temperature of the ambient air. The third coolant is used to cool the electrical energy storage and the cab space. Thus, it is possible to use a common refrigeration circuit for indirect cooling of the electrical energy storage and the cab space. The use of one refrigerant circuit for two cooling purposes results in a reduced number of including components. Furthermore, the first circuit, the second circuit and the third circuit includes coolant of different temperatures which makes it possible to cool the combustion engine, the electrical machine, the cab space and the electrical energy storage to individual efficient operating temperatures.

According to an embodiment of the invention, the refrigerant in the refrigerant circuit is cooled by the second coolant in the second circuit in a condenser. The second coolant has a relatively low temperature. Thus, the refrigerant can provide a relatively low condensation temperature in the condenser which favors the efficiency of the refrigerant circuit.

According to an embodiment of the invention, the second circuit comprises a first parallel line in which the second coolant cools the electrical machine and a second parallel line in which the second coolant cools the refrigerant in the condenser. In this case, coolant of the same low temperature is directed to the electrical machine as well as to the condenser. The second circuit may comprise a valve member distributing the second coolant to the first parallel line and the second parallel line. The cooling demand of the electrical machine and the refrigerant in the condenser varies during different operating conditions. By means of such a valve member, it is possible to distribute the coolant flow rate to the respective objects in view of their actual cooling demand.

According to an embodiment of the invention, the second circuit also cools at least one of the following objects charge air in a charge air cooler, power electronics controlling the flow of electrical energy between the electrical energy storage and the electrical machine and gearbox oil in an oil cooler. Preferably, the objects cooled by the second circuit are arranged in an order based on their individual efficient temperatures. The second coolant may, for example, cool the charge air in a charge air cooler in a first position in one of the parallel line and the refrigerant in the condenser in a first position in the other parallel line.

According to an embodiment of the invention, the second radiator is arranged in an upstream position of the first radiator in view of the direction of an air stream forced through radiators. Preferably, the second coolant is cooled in the second radiator by air of ambient temperature. The second circuit may comprise a second radiator bypass line and a valve member controlling the flow through the second radiator bypass line. In this case, it is possible to control the flow of the second coolant flow rate through the second radiator. During operating condition when the cooling demand is low, the valve member may direct at least a main part of the coolant flow rate through the second radiator bypass line.

According to an embodiment of the invention, the third circuit comprises a first set of parallel lines comprising a first line and a second line and in that the third coolant is cooled by the refrigerant in the chiller in the first line and by air in a third radiator in the second line. During operating conditions of low cooling demand, it is not necessary to use the refrigerant circuit. In this case, the third coolant is solely cooled in the third radiator. The third radiator may be arranged in a position in the vehicle such that the third coolant is cooled by air of ambient temperature. An electric fan may provide a cooling air stream through the third radiator.

According to an embodiment of the invention, the third circuit comprises a heater in the second line of the first set of parallel lines. An electrical energy storage may have an efficient temperature range of about 20-25°C. During, for example, a cold start when the ambient temperature is low, the electrical energy storage has a too low temperature. By means of such a heater, it is possible to heat the third coolant before it is directed to the electrical energy storage. The heater may be an electric heater.

According to an embodiment of the invention, the third circuit comprises a second set of parallel lines comprising a first line and a second line and in that the third coolant cools the electrical energy storage in the first line and air in the cab space in an air cooler in the second line. In this case, it is possible to use coolant at the same low temperature for cooling of the electric energy storage and the cab space. The third circuit may comprises a valve member distributing the third coolant between said parallel lines. The cooling demand of the electrical energy storage and the cab space varies during different operating conditions. By means of such a valve member, it is possible to distribute the coolant flow rate to said components in response to their actual cooling demand.

According to an embodiment of the invention, the second circuit comprises an electric coolant pump, the third circuit comprises an electric coolant pump, and the refrigerant circuit comprises an electric compressor. In this case, it is possible to start the second circuit, the third circuit and the refrigerant circuit and to cool the cab space when the combustion engine is not in operation.

According to an embodiment of the invention, the first circuit comprises a thermostat directing the first coolant to the first radiator or to a first radiator bypass line. A conventional wax thermostat may, for example, be used to control the temperature of the first coolant and the combustion engine. The first coolant in the first circuit may also be used for cooling a retarder in the vehicle.

### BRIEF DESCRIPTION OF THE DRAWINGS

In the following preferred embodiments of the invention is described, as examples, with reference to the attached drawings, in which:
- Fig. 1: shows a cooling system according to a first embodiment of the invention,
- Fig. 2: shows a cooling system according to a second embodiment of the invention and
- Fig. 3: shows a cooling system according to a third embodiment of the invention.

### DETAILED DESCRIPTION OF PREFERRED EMBODIMENTS OF THE INVENTION

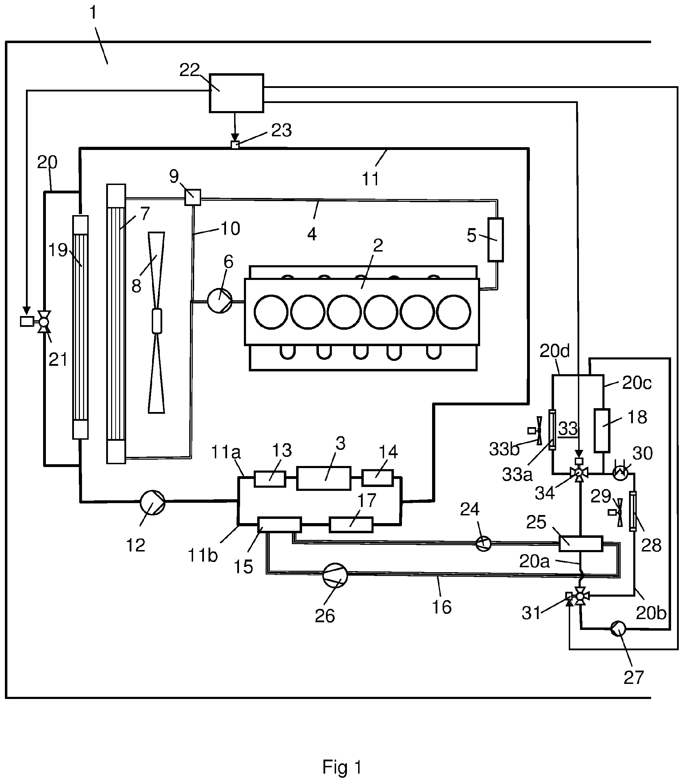

Fig. 1 shows a schematically disclosed hybrid vehicle 1 powered by a combustion engine 2 and an electrical machine 3. The combustion engine 2 may be a diesel engine. The combustion engine 2 and the electrical machine 3 may drive the vehicle independently or together. During certain operating conditions, the electrical machine 3 works as a generator where it supplies electrical energy to an electrical energy storage 18 in the vehicle 1. The vehicle 1 comprises a cooling system. The cooling system comprises a first circuit 4 with a circulating first coolant cooling the combustion engine 2 and a retarder 5. A first coolant pump 6 circulates the first coolant in the first circuit 4. The first coolant is cooled in a first radiator 7 arranged at a front portion of the vehicle 1. A radiator fan 8 and the ram air provide a cooling air stream through the first radiator 7 during operation of the vehicle 1. A thermostat 9 directs the coolant to a radiator bypass line 10 when the coolant has a lower temperature than a regulating temperature of the thermostat 9. The thermostat 9 directs the coolant to the first radiator 7 when the coolant has a higher temperature than the regulating temperature.

The cooling system comprises a second circuit 11. An electrically driven second coolant pump 12 circulates a second coolant in the second circuit 11. The second circuit 11 comprises a first set of parallel lines 11a, 11b in the form of a first line 11a and a second line 11b. The first line 11a comprises a charge air cooler 13 for cooling of charge air, the electrical machine 3 and oil for a gearbox 14. The second circuit 11 comprises a second parallel line 11b in which the coolant cools refrigerant in a condenser 15 of a refrigerant system 16 and power electronics 17 which controls the flow of electrical energy between the electrical machine 3 and an electrical energy storage 18. The second coolant is cooled in a second radiator 19 arranged at a front portion of the vehicle in a position upstream of the first radiator 7 with reference to the direction of the cooling air stream through the radiators 7, 19 provided by the radiator fan 8 and ram air. The second circuit 11 comprises a second radiator bypass 20 line and a first valve member 21 regulating the coolant flow through the second radiator bypass 20 and thus through the second radiator 19. A control unit 22 controls the first valve member 21. A temperature sensor 23 senses the temperature of the second coolant in the second circuit 11. The control unit 22 controls the first valve member 21 by means of information from the temperature sensor 23 about the temperature of the second coolant.

The cooling system further comprises the above mentioned refrigerant circuit 16. The refrigerant circuit 16 comprises the condenser 15 where the refrigerant is cooled by the second coolant in the second circuit 11. The refrigerant is cooled in the condenser 17 to a temperature at which it condenses. The refrigerant is directed from the condenser 17 to an expansion valve 24 where it receives a pressure drop. After that, the refrigerant enters a chiller 25 where it cools the third coolant in the third circuit 20. The refrigerant is heated in the chiller 25 to temperature at which it evaporates. The evaporated refrigerant is directed to an electrically driven compressor 26 where it is compressed to a higher pressure.

The cooling system also comprises the above mentioned third circuit 20. An electrically driven third coolant pump 27 circulates the coolant in the third circuit 20. The third circuit comprises a first set of parallel lines in the form of a first line 20a and a second line 20b. The first line 20a comprises the chiller 25 of the refrigerant system. The second line 20b comprises a third radiator 28 where the third coolant is cooled by forced through the third radiator 28 by an electrically powered fan 29. The third coolant may be cooled by air of ambient temperature in the third radiator 28. The second line 20b also comprise a heater 30. Thus, the third coolant can be cooled in the third radiator 28 or heated in the heater 30. A second valve member 31 controls the coolant flow to the first set of parallel lines 20a, 20b. The third circuit 20 comprises a second set of parallel lines. The second set of parallel lines comprises a first parallel line 20c in which the coolant cools the electrical energy storage 18. The second set of parallel lines comprises a second parallel line 20d in which the third coolant cools air in the cab space 33 in an air cooler 33a. An electrically powered fan 33b provides a cooling air stream through the air cooler 33a. A third valve member 34 controls the coolant flow to the second set of parallel lines 20c, 20d.

During operation of the vehicle 1, the first coolant in the first circuit 4 cools the combustion engine 2 and the retarder 5. The temperature of the coolant directed to the combustion engine 2 is controlled by the thermostat 9. The thermostat 9 has a relatively high regulating temperature such that the temperature of the combustion engine 2 is within an efficient temperature range which may be about 90°C -100° C.

The second coolant in the second circuit 11 cools components which have a lower efficient operating temperature than the combustion engine 2. In this case, the coolant in the second circuit 11 cools charge air in the charge air cooler 13, the electrical machine 3, oil in the gearbox 14, refrigerant in the condenser 15 and the power electronics 17. The control unit 22 receives information from the temperature sensor 23 about the temperature of the second coolant in the second circuit 11. In case the second coolant has a too high temperature, the control unit 22 adjusts the first valve member 21 such that a larger part of the second coolant flow is directed to the second radiator 19 and a smaller part of the coolant flow is directed to the second radiator bypass line 20. In case the coolant has a too low temperature, the control unit 22 adjusts the first valve member 21 such that a smaller part of the coolant is directed to the second radiator 19 and a larger part of the coolant flow is directed to the second radiator bypass line 20. The control unit 22 may also receive information about the temperature of the individual components 3, 13, 14, 15, 17 and adjust the first valve member 21 in view of this information. Alternatively or in combination, the control unit 22 can control the speed of the second coolant pump 12 and thus the second coolant flow in the second circuit 11.

The control unit 22 may receive information about the temperature of the air temperature in the cab, the temperature of the electrical energy storage 18 and the temperature of the third coolant in the third circuit 20. In view of this information, the control unit 22 controls the second valve member 31 such that it directs a part or the third coolant flow to the first line 20a and a remaining part or the coolant flow to the second line 20b. During operation conditions when there is a large cooling demand of the above mentioned objects 18, 33, the control unit 22 activates the compressor in the refrigerant circuit 16. In this case, at least a main part of the third coolant flow is directed to the first line 20a and the chiller 25. During operation conditions when there is a small cooling demand, the control unit 22 may shut off the compressor 26 and direct the entire third coolant flow rate to the air cooler 28. In view of information about the above mentioned temperatures, the control unit 22 controls the third valve member 34 such that it distributes the third coolant flow from the first line 20a and/or the second line 20b to the third line 20c and the electrical energy storage 18 and/or to the fourth line 20d and the air cooler 33a. The coolant flow from the second line 20b is usually directed to the electrical energy storage 18. In case the electrical energy storage 18 has a too low temperature, it is possible to activate the heater 30 and heat the coolant before it is directed to the electrical energy storage 18. The control unit 22 may also control the speed of the third coolant pump 27 and thus the third coolant flow rate in the third circuit 20. Such a control of the flow rate and temperature of the third coolant makes it possible to substantially continuously maintain a desired temperature of the electrical energy storage 18 and the air in the cab space 33.

Since the second coolant pump, the third coolant pump 27 and the compressor 26 is electrically driven, it is possible to start the circulation of the second coolant in the second circuit 11, the circulation of the third coolant in the third circuit 20 and the circulation of refrigerant in the refrigerant circuit and to cool the cab space 33 when the combustion engine 2 is not in operation.

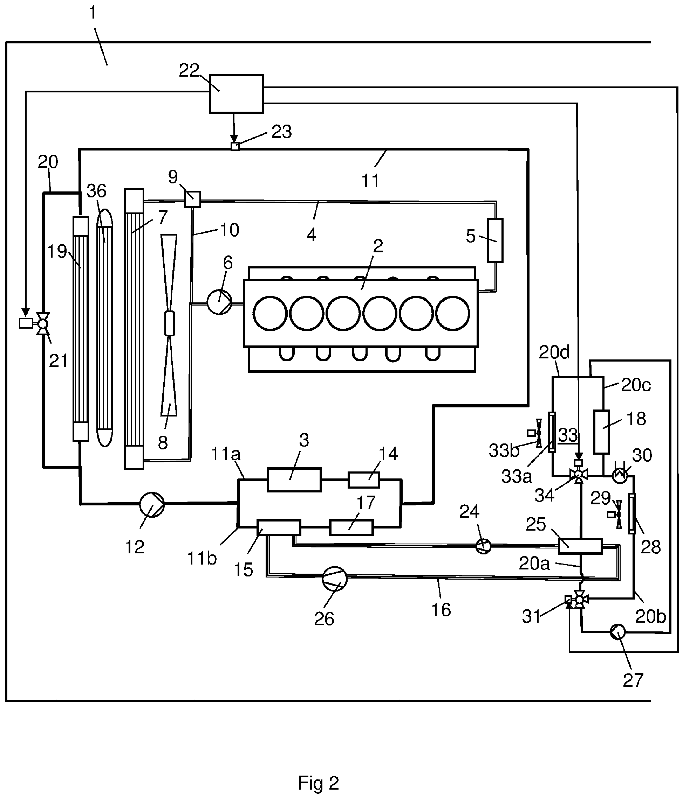

Fig. 2 shows an alternative embodiment of the cooling system. In this case, the second circuit 11 and the cooling system are not used to cool the charge air in a coolant cooled charge air cooler 13. In this case, the charge air is cooled in an air cooled charged air cooler 36 arranged between the first radiator 7 and the second radiator 19.

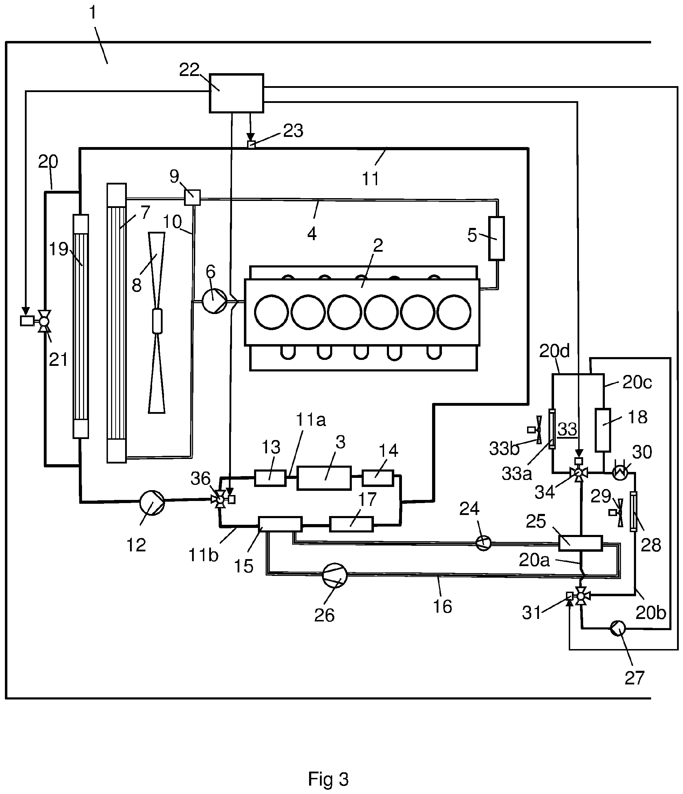

Fig. 3 shows a further alternative embodiment of the cooling system. In this case the second circuit 11 comprises a fourth valve member 36. By means of the fourth valve member 36, it is possible to distribute the coolant flow between the first line 11a and the second line 11b.

The invention is not restricted to the described embodiment but may be varied freely within the scope of the claims.

## Claims

1. A cooling system for a hybrid vehicle (1) powered by a combustion engine (2) and an electrical machine (3), wherein the cooling system comprises a first circuit (4) with a first circulating coolant which is cooled in a first radiator (7) before the first circulating coolant cools the combustion engine (2), a second circuit (11) with a second circulating coolant which is cooled in a second radiator to a lower temperature than the first coolant before the second circulating coolant cools the electrical machine (3),
and a refrigerant circuit (16), **characterized in that** the cooling system comprises a third circuit (20) with a third circulating coolant cooled by refrigerant in a chiller (25) of the refrigerant circuit (16) to a lower temperature than the second coolant before the third circulating coolant cools an electrical energy storage (18) and a cab space (33) in the vehicle (1).

2. A cooling system according to claim 1, **characterized in that** the refrigerant in the refrigerant circuit (16) is cooled in a condenser (15) by the second coolant in the second circuit (11).

3. A cooling system according to claim 2, **characterized in that** the second circuit comprises a first parallel line (11a) in which the second coolant cools the electrical machine (3) and a second parallel line (11b) in which the second coolant cools refrigerant in the condenser (15).

4. A cooling system according to claim 3, **characterized in that** the second circuit comprises a valve member (36) distributing the second coolant to the first parallel line (11a) or the second parallel line (11b).

5. A cooling system according to any one of the preceding claims, **characterized in that** the second coolant in the second circuit (11) also cools at least one of the following objects namely charge air in a charge air cooler (13), power electronics (17) controlling the flow of electrical energy between the electrical energy storage (18) and the electrical machine (3) and gearbox oil in an oil cooler (14).

6. A cooling system according to any one of the preceding claims, **characterized in that** the second radiator (19) is arranged in an upstream position of the first radiator (7) in view of the direction of an air stream forced through radiators (7, 19).

7. A cooling system according to any one of the preceding claims, **characterized in that** the second circuit (11) comprises a second radiator bypass line (20) and a valve member (21) controlling the flow through the second radiator bypass line (20).

8. A cooling system according to any one of the preceding claims, **characterized in that** the third circuit (20) comprises a first set of parallel lines comprising a first line (20a) and a second line (20b) and **in that** the third coolant is cooled in the first line (20a) by refrigerant in the chiller (25) and in the second line (20b) by air in a third radiator (28).

9. A cooling system according to claim 8, **characterized in that** the third circuit (20) comprises a heater (30) in the second line (20b).

10. A cooling system according to claim 8 or 9, **characterized in that** the third circuit (20) comprises a valve member (31) distributing the third coolant between said lines (20a, 20b) of the first parallel line set.

11. A cooling system according claim 8, **characterized in that** the third circuit (20) comprises a second set of parallel lines comprising a third line (20c) and a fourth line (20d) and **in that** the third coolant cools the electrical energy storage (18) in the third line (20c) and air in an air cooler (33a) in the cab space (33) in the fourth line (20d).

12. A cooling system according to claim 11, **characterized in that** the third circuit (20) comprises a third valve member (34) distributing the third coolant between said lines (20c, 20d) of the second parallel line set.

13. A cooling system according to any one of the preceding claims, **characterized in that** the second circuit (11) comprises an electric coolant pump (12), the third circuit (20) comprises an electric coolant pump (12), and the refrigerant circuit comprises an electric compressor (26).

14. A cooling system according to any one of the preceding claims, **characterized in that** the first circuit comprises a thermostat (9) directing the first coolant to the first radiator (7) or a first radiator bypass line (10).

## Patentansprüche

1. Kühlsystem für ein von einem Verbrennungsmotor (2) und einer elektrischen Maschine (3) angetriebenes Hybridfahrzeug (1), wobei das Kühlsystem einen ersten Kreis (4) mit einem ersten zirkulierenden Kühlmittel, das in einem ersten Kühler (7) gekühlt wird, bevor das erste zirkulierende Kühlmittel den Verbrennungsmotor (2) kühlt, einen zweiten Kreis (11) mit einem zweiten zirkulierenden Kühlmittel, das in einem zweiten Kühler auf eine niedrigere Temperatur als das erste Kühlmittel gekühlt wird, bevor das zweite zirkulierende Kühlmittel die elektrische Maschine (3) kühlt, und einen Kältemittelkreis (16) aufweist, **dadurch gekennzeichnet, dass** das Kühlsystem einen dritten Kreis (20) mit einem dritten zirkulierenden Kühlmittel aufweist, das durch Kältemittel in einem Kühlaggregat (25) des Kältemittelkreises (16) auf eine niedrigere Temperatur als das zweite Kühlmittel gekühlt wird, bevor das dritte zirkulierende Kühlmittel einen elektrischen Energiespeicher (18) und einen Fahrerkabinenraum (33) in dem Fahrzeug (1) kühlt.

2. Kühlsystem nach Anspruch 1, **dadurch gekennzeichnet, dass** das Kältemittel in dem Kältemittelkreis (16) in einem Kondensator (15) durch das zweite Kühlmittel in dem zweiten Kreis (11) gekühlt wird.

3. Kühlsystem nach Anspruch 2, **dadurch gekennzeichnet, dass** der zweite Kreis eine erste parallele Leitung (11a) umfasst, in der das zweite Kühlmittel die elektrische Maschine (3) kühlt, und eine zweite parallele Leitung (11b), in der das zweite Kühlmittel Kältemittel in dem Kondensator (15) kühlt.

4. Kühlsystem nach Anspruch 3, **dadurch gekennzeichnet, dass** der zweite Kreis ein Ventilglied (36) aufweist, welches das zweite Kühlmittel der ersten parallelen Leitung (11a) oder der zweiten parallelen Leitung (11b) zuteilt.

5. Kühlsystem nach einem der vorhergehenden Ansprüche, **dadurch gekennzeichnet, dass** das zweite Kühlmittel in dem zweiten Kreis (11) auch zumindest eines der folgenden Dinge kühlt, nämlich Ladeluft in einem Ladeluftkühler (13), Leistungselektronik (17), die den Fluss elektrischer Energie zwischen dem elektrischen Energiespeicher (18) und der elektrischen Maschine (3) steuert, und Getriebeöl in einem Ölkühler (14).

6. Kühlsystem nach einem der vorhergehenden Ansprüche, **dadurch gekennzeichnet, dass** der zweite Kühler (19) gesehen in der Richtung eines durch Kühler (7, 19) gezwungenen Luftstroms an einer Stelle stromaufwärts des ersten Kühlers (7) angeordnet ist.

7. Kühlsystem nach einem der vorhergehenden Ansprüche, **dadurch gekennzeichnet, dass** der zweite Kreis (11) eine zweite Kühlerbypassleitung (20) und ein Ventilglied (21) aufweist, das den Durchfluss durch die zweite Kühlerbypassleitung (20) steuert.

8. Kühlsystem nach einem der vorhergehenden Ansprüche, **dadurch gekennzeichnet, dass** der dritte Kreis (20) einen ersten Satz paralleler Leitungen mit einer ersten Leitung (20a) und einer zweiten Leitung (20b) aufweist, und dass das dritte Kühlmittel in der ersten Leitung (20a) durch Kältemittel in dem Kühlaggregat (25) und in der zweiten Leitung (20b) durch Luft in einem dritten Kühler (28) gekühlt wird.

9. Kühlsystem nach Anspruch 8, **dadurch gekennzeichnet, dass** der dritte Kreis (20) eine Heizeinrichtung (30) in der zweiten Leitung (20b) aufweist.

10. Kühlsystem nach Anspruch 8 oder 9, **dadurch gekennzeichnet, dass** der dritte Kreis (20) ein Ventilglied (31) umfasst, welches das dritte Kühlmittel zwischen den Leitungen (20a, 20b) des ersten Satzes paralleler Leitungen aufteilt.

11. Kühlsystem nach Anspruch 8, **dadurch gekennzeichnet, dass** der dritte Kreis (20) einen zweiten Satz paralleler Leitungen mit einer dritten Leitung (20c) und einer vierten Leitung (20d) umfasst, und dass das dritte Kühlmittel den elektrischen Energiespeicher (18) in der dritten Leitung (20c) und Luft in einem Luftkühler (33a) in dem Fahrerkabinenraum (33) in der vierten Leitung (20d) kühlt.

12. Kühlsystem nach Anspruch 11, **dadurch gekennzeichnet, dass** der dritte Kreis (20) ein drittes Ventilglied (34) aufweist, welches das dritte Kühlmittel zwischen den Leitungen (20c, 20d) des zweiten Satzes paralleler Leitungen aufteilt.

13. Kühlsystem nach einem der vorhergehenden Ansprüche, **dadurch gekennzeichnet, dass** der zweite Kreis (11) eine elektrische Kühlmittelpumpe (12) aufweist, der dritte Kreis (20) eine elektrische Kühlmittelpumpe (12) aufweist, und der Kältemittelkreis einen elektrischen Kompressor (26) aufweist.

14. Kühlsystem nach einem der vorhergehenden Ansprüche, **dadurch gekennzeichnet, dass** der erste Kreis ein Thermostat (9) aufweist, welches das erste Kühlmittel zum ersten Kühler (7) oder zu einer ersten Kühlerbypassleitung (10) leitet.

## Revendications

1. Système de refroidissement pour un véhicule hybride (1) alimenté par un moteur à combustion (2) et une machine électrique (3), dans lequel le système de refroidissement comprend un premier circuit (4) avec un premier liquide de refroidissement en circulation qui est refroidi dans un premier radiateur (7) avant que le premier liquide de refroidissement en circulation ne refroidisse le moteur à combustion (2), un deuxième circuit (11) avec un deuxième liquide de refroidissement en circulation qui est refroidi dans un deuxième radiateur à une température inférieure à celle du premier liquide de refroidissement avant que le deuxième liquide de refroidissement en circulation ne refroidisse la machine électrique (3),
et un circuit de refroidissement (16), **caractérisé en ce que** le système de refroidissement comprend un troisième circuit (20) avec un troisième liquide de refroidissement en circulation refroidi par réfrigérant dans un refroidisseur (25) du circuit de refroidissement (16) à une température inférieure au deuxième liquide de refroidissement avant que le troisième liquide de refroidissement en circulation ne refroidisse un stockage d'énergie électrique (18) et un espace de cabine (33) dans le véhicule (1).

2. Système de refroidissement selon la revendication 1, **caractérisé en ce que** le réfrigérant dans le circuit de refroidissement (16) est refroidi dans un condenseur (15) par le deuxième liquide de refroidissement dans le deuxième circuit (11).

3. Système de refroidissement selon la revendication 2, **caractérisé en ce que** le deuxième circuit comprend une première ligne parallèle (11a) dans laquelle le deuxième liquide de refroidissement refroidit la machine électrique (3) et une deuxième ligne parallèle (11b) dans laquelle le deuxième liquide de refroidissement refroidit le réfrigérant dans le condenseur (15) .

4. Système de refroidissement selon la revendication 3, **caractérisé en ce que** le deuxième circuit comprend un élément de vanne (36) distribuant le deuxième liquide de refroidissement à la première ligne parallèle (11a) ou à la deuxième ligne parallèle (11b).

5. Système de refroidissement selon l'une quelconque des revendications précédentes, **caractérisé en ce que** le deuxième liquide de refroidissement dans le deuxième circuit (11) refroidit également au moins un des éléments suivants, à savoir l'air de suralimentation dans un refroidisseur d'air de suralimentation (13), l'électronique de puissance (17) contrôlant le débit d'énergie électrique entre le stockage d'énergie électrique (18) et la machine électrique (3) et l'huile de boîte de vitesses dans un refroidisseur d'huile (14).

6. Système de refroidissement selon l'une quelconque des revendications précédentes, **caractérisé en ce que** le deuxième radiateur (19) est agencé dans une position en amont du premier radiateur (7) en vue de l'orientation d'un flux d'air forcé à travers les radiateurs (7, 19).

7. Système de refroidissement selon l'une quelconque des revendications précédentes, **caractérisé en ce que** le deuxième circuit (11) comprend une deuxième ligne de dérivation de radiateur (20) et un élément de vanne (21) contrôlant le flux à travers la deuxième ligne de dérivation de radiateur (20).

8. Système de refroidissement selon l'une quelconque des revendications précédentes, **caractérisé en ce que** le troisième circuit (20) comprend un premier ensemble de lignes parallèles comprenant une première ligne (20a) et une deuxième ligne (20b) et **en ce que** le troisième liquide de refroidissement est refroidi dans la première ligne (20a) par réfrigérant dans le refroidisseur (25) et dans la deuxième ligne (20b) par de l'air dans un troisième radiateur (28).

9. Système de refroidissement selon la revendication 8, **caractérisé en ce que** le troisième circuit (20) comprend un élément de chauffage (30) dans la deuxième ligne (20b).

10. Système de refroidissement selon la revendication 8 ou 9, **caractérisé en ce que** le troisième circuit (20) comprend un élément de vanne (31) distribuant le troisième liquide de refroidissement entre lesdites lignes (20a, 20b) du premier ensemble de lignes parallèles.

11. Système de refroidissement selon la revendication 8, **caractérisé en ce que** le troisième circuit (20) comprend un deuxième ensemble de lignes parallèles comprenant une troisième ligne (20c) et une quatrième ligne (20d) et **en ce que** le troisième liquide de refroidissement refroidit le stockage d'énergie électrique (18) dans la troisième ligne (20c) et l'air dans un refroidisseur d'air (33 a) dans l'espace de cabine (33) dans la quatrième ligne (20d).

12. Système de refroidissement selon la revendication 11, **caractérisé en ce que** le troisième circuit (20) comprend un troisième élément de vanne (34) distribuant le troisième liquide de refroidissement entre lesdites lignes (20c, 20d) du deuxième ensemble de lignes parallèles.

13. Système de refroidissement selon l'une quelconque des revendications précédentes, **caractérisé en ce que** le deuxième circuit (11) comprend une pompe de liquide de refroidissement électrique (12), le troisième circuit (20) comprend une pompe de liquide de refroidissement électrique (12), et le circuit de refroidissement comprend un compresseur électrique (26).

14. Système de refroidissement selon l'une quelconque des revendications précédentes, **caractérisé en ce que** le premier circuit comprend un thermostat (9) dirigeant le premier liquide de refroidissement jusqu'au premier radiateur (7) ou jusqu'à une première ligne de dérivation du radiateur (10).
